# EUROPEAN PATENT APPLICATION

(11) **EP 2 476 503 A1**
(43) Date of publication of application: **18.07.2012**
(21) Application number: 10815193.7
(22) Date of filing: 07.06.2010
(51) Int. Cl.: B23K 20/12, B22D 11/00, B23K 20/24, F15B 15/14, F16C 7/02

(54) **METHOD FOR MANUFACTURING PISTON ROD**

(30) Priority: 09.09.2009 JP 2009207892
(71) Applicant: Kayaba Industry Co., Ltd., Tokyo 105-6111 (JP)
(72) Inventor: DOGAMI, Masaki, Tokyo 105-6111 (JP); TAMAI, Minoru, Tokyo 105-6111 (JP); UENO, Kazuo, Tokyo 105-6111 (JP); TANAHASHI, Mineo, Tokyo 105-6111 (JP)
(74) Representative: Grünecker, Kinkeldey, Stockmair & Schwanhäusser
(86) International application number: PCT/JP2010/059986
(87) International publication number: WO 2011/030595

(57) **Abstract**

A piston rod manufacturing method for manufacturing a piston rod by joining together respective end surfaces of a rod main body and a rod head, includes a first step of hollowing out respective axial center portions of the rod main body and the rod head from the respective end surfaces thereof in order to remove impurities caused by center segregation, and a second step of joining together the respective end surfaces of the rod main body and the rod head by friction welding.

## Description

### FIELD OF THE INVENTION

This invention relates to a method for manufacturing a piston rod.

### BACKGROUND OF THE INVENTION

As a method for manufacturing a piston rod of a hydraulic cylinder, JP2000-240609A discloses a method of joining a solid rod main body and a solid rod head integrally through friction welding.

### SUMMARY OF THE INVENTION

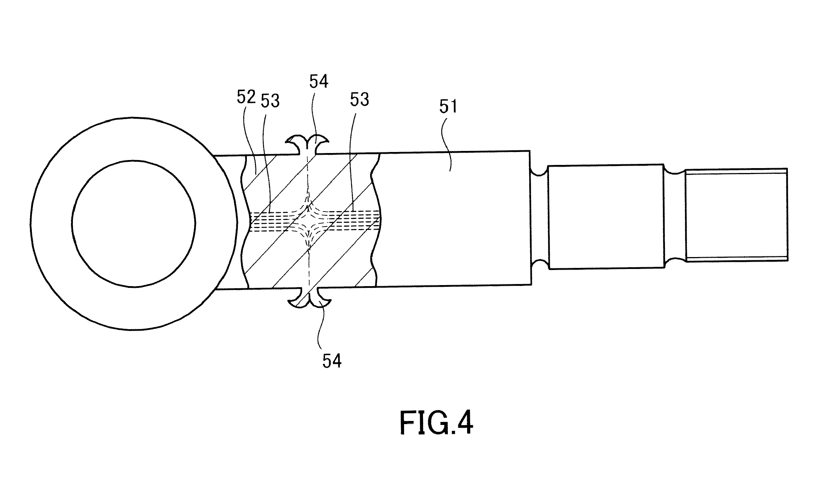

A rod main body and a rod head are typically manufactured by processing a steel material manufactured by continuous casting. Impurities caused by center segregation exist in a central portion of the steel material manufactured by continuous casting. Therefore, as shown in FIG. 4, when a solid rod main body 51 and a solid rod head 52 are joined by friction welding, center segregation 53 existing in respective central portions thereof is discharged to an outer periphery in the form of burrs 54 due to plastic flow occurring during the friction welding. However, the center segregation 53 is not discharged completely, and therefore the impurities remain as a thin film on a joint surface.

Diffusible hydrogen contained in a base material gathers in the impurities remaining on the joint surface easily, causing hydrogen embrittlement on the joint surface. As a result, a delayed fracture may occur, leading to a separation fracture between the rod main body and the rod head at the joint surface.

This invention has been designed in consideration of this problem, and an object thereof is to provide a piston rod manufacturing method with which a joint strength between a rod main body and a rod head joined by friction welding can be improved.

This invention is a piston rod manufacturing method for manufacturing a piston rod by joining together respective end surfaces of a rod main body and a rod head. The piston rod manufacturing method includes a first step of hollowing out respective axial center portions of the rod main body and the rod head from the respective end surfaces thereof in order to remove impurities caused by center segregation, and a second step of joining together the respective end surfaces of the rod main body and the rod head by friction welding.

According to this invention, the rod main body and the rod head are integrated by joining respective end surfaces thereof using friction welding after removing impurities existing in respective axial center portions thereof, and therefore a piston rod having no impurities on its joint surface can be manufactured. As a result, the joint strength between the rod main body and the rod head can be improved.

### BRIEF DESCRIPTION OF THE DRAWINGS

FIG. 1 is a plan view and a partial sectional view of a rod main body and a rod head prior to a piston rod manufacturing process.
FIG. 2 is a plan view and a partial sectional view showing a first step of a piston rod manufacturing method according to an embodiment of this invention.
FIG. 3 is a partial sectional view showing a second step of the piston rod manufacturing method according to this embodiment of this invention.
FIG. 4 is a plan view and a partial sectional view showing a piston rod manufactured according to a conventional manufacturing method.

### EMBODIMENT OF THE INVENTION

An embodiment of this invention will be described below with reference to the figures.

In a piston rod manufacturing method according to this embodiment, a piston rod 1 is manufactured by joining a rod main body 2 and a rod head 3 through friction welding. In this embodiment, the piston rod 1 is inserted to be free to advance and retreat into a cylinder main body of a fluid pressure cylinder used as an actuator (not shown).

The rod main body 2 and the rod head 3 are manufactured by processing solid carbon steel manufactured by continuous casting. Steel having a carbon content of 0.45%, for example, is used as the carbon steel.

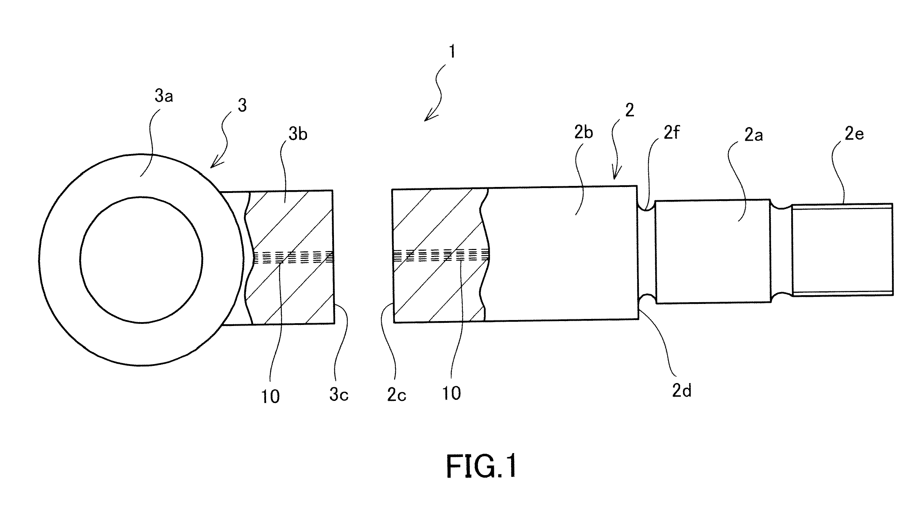

Referring to FIG. 1, the rod main body 2 and the rod head 3 will be described. FIG. 1 is a plan view showing the rod main body 2 and the rod head 3 prior to a process for manufacturing the piston rod 1 (i.e. prior to the friction welding).

The rod main body 2 is constituted by a small diameter portion 2a to which a piston (not shown) that slides through a cylinder main body is coupled, and a large diameter portion 2b having a larger diameter than the small diameter portion 2a. The annular piston is fitted onto an outer periphery of the small diameter portion 2a and latched to a step portion 2d that forms a boundary between the small diameter portion 2a and the large diameter portion 2b, and then fixed by a nut that is fastened to a male screw portion 2e of the small diameter portion 2a. A planar end surface 2c is formed on the large diameter portion 2b of the rod main body 2.

The rod head 3 is constituted by an annular clevis 3a coupled to a load, and a trunk portion 3b having an identical diameter to the large diameter portion 2b of the rod main body 2. A planar end surface 3c is formed on the trunk portion 3b.

The piston rod 1 is manufactured by joining the end surface 2c of the large diameter portion 2b of the rod main body 2 and the end surface 3c of the trunk portion 3b of the rod head 3 integrally through friction welding.

The rod main body 2 and the rod head 3 are manufactured by processing a solid steel material manufactured by continuous casting. Impurities contained in molten steel are more likely to remain in a liquid than in a solid, and therefore, during the continuous casting, impurities accumulate easily in an axial center portion that solidifies last. Hence, impurities caused by center segregation exist in the axial center portion of the steel material manufactured by continuous casting. Accordingly, impurities 10 caused by center segregation exist in an axial center portion of the rod main body 2 and an axial center portion of the trunk portion 3b of the rod head 3. In FIGs. 1 to 3, the impurities 10 are depicted in pattern form using dotted lines.

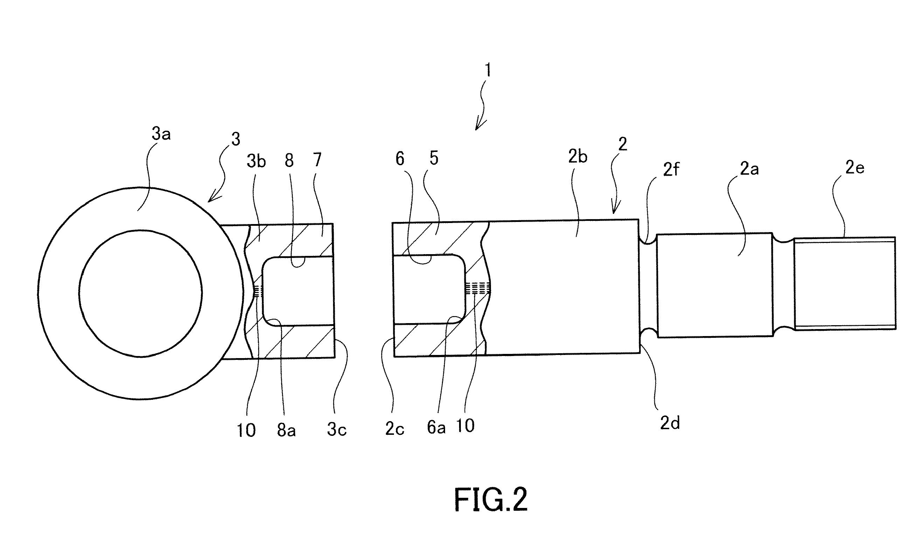

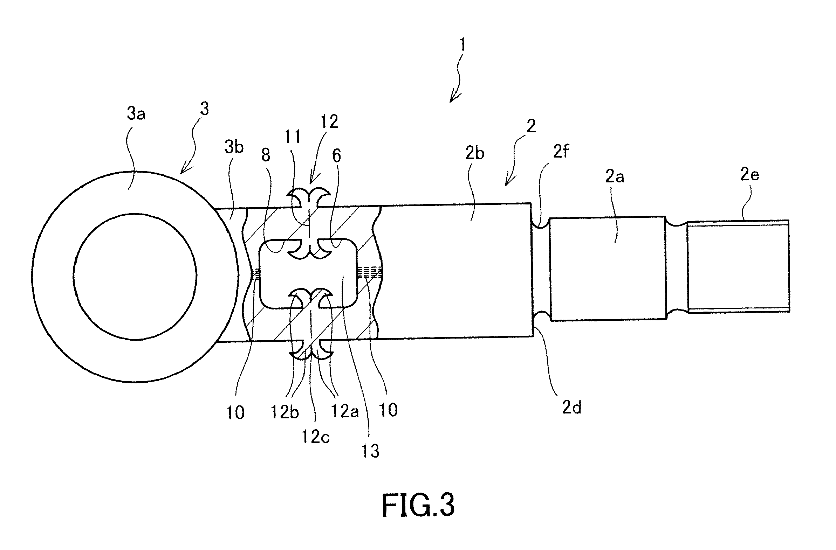

Next, referring to FIGs. 2 and 3, a process for manufacturing the piston rod 1 will be described.

First, in a first step, as shown in FIG. 2, the impurities 10 caused by center segregation are removed by hollowing out the axial center portion of the solid rod main body 2 into a columnar shape from the end surface 2c. As a result, a hole portion 6 that is surrounded by an annular portion 5 and that has an opening portion in the end surface 2c is formed in the rod main body 2. By molding the hole portion 6, the impurities 10 in the vicinity of the end surface 2c are removed so that the impurities 10 no longer exist on the end surface 2c.

An inner diameter of the hole portion 6 is formed such that a sectional area of the annular portion 5 of the rod main body 2 is larger than a minimum sectional area portion 2f formed on the step portion 2d. The inner diameter of the hole portion 6 is formed thus to ensure that the annular portion 5 does not constitute a weakest part of the piston rod 1. Further, a depth of the hole portion 6 is set such that burrs 12 (see FIG. 3) generated during joining are formed to be short enough to be accommodated within the hole portion 6. Furthermore, a bottom portion peripheral edge 6a of the hole portion 6 is chamfered into a curved surface shape. The bottom portion peripheral edge 6a is chamfered to ensure that when a tensile compressive load acts on the piston rod 1, stress does not concentrate in the bottom portion peripheral edge 6a of the hole portion 6.

In the first step, the impurities 10 caused by center segregation are removed likewise from the rod head 3 by hollowing out the axial center portion of the solid trunk portion 3b into a columnar shape from the end surface 3c. As a result, a hole portion 8 that is surrounded by an annular portion 7 and that has an opening portion in the end surface 3c is formed in the trunk portion 3b of the rod head 3. By molding the hole portion 8, the impurities 10 in the vicinity of the end surface 3c are removed so that the impurities 10 no longer exist on the end surface 3c.

An inner diameter and a depth of the hole portion 8 are formed at substantially identical dimensions to the hole portion 6 in the rod main body 2. Further, a bottom portion peripheral edge 8a of the hole portion 8 is chamfered into a curved surface shape, similarly to the hole portion 6 in the rod main body 2.

The respective axial center portions of the rod main body 2 and the rod head 3 are hollowed out by cutting. It should be noted, however, that the respective axial center portions of the rod main body 2 and the rod head 3 may be hollowed out using a method other than cutting, for example deformation processing such as forging.

Next, in a second step, the respective end surfaces 2c, 3c of the rod main body 2 and the rod head 3 are joined by friction welding. Specific procedures of the friction welding will be described below.
(1) As shown in FIG. 2, the rod main body 2 and the rod head 3 are disposed coaxially such that the respective end surfaces 2c, 3c oppose each other.
(2) As shown in FIG. 3, the rod main body 2 is moved toward the rod head 3 while rotating the rod head 3 about its central axis such that the end surface 2c of the rod main body 2 is pressed against the end surface 3c of the rod head 3 and friction heat is generated on a resulting joint surface 11. As a result of the friction heat, the vicinity of the joint surface 11 softens.
(3) Once the rod main body 2 has been pressed so as to move by a predetermined amount of displacement, rotation of the rod head 3 is stopped.
(4) The rod main body 2 is pressed further against the rod head 3 side by a large load, whereby a high temperature portion in the vicinity of the joint surface 11 is caused to flow plastically to an outer peripheral side and an inner peripheral side and is discharged in the form of the burrs 12, as shown in FIG. 3. A hollow portion 13 is formed in the interior of the piston rod 1 by the hole portion 6 in the rod main body 2 and the hole portion 8 in the rod head 3. Due to the existence of the hollow portion 13, the high temperature portion in the vicinity of the joint surface 11 also flows plastically to the inner peripheral side so as to be discharged in the form of the burrs 12. Hence, the high temperature portion in the vicinity of the joint surface 11 is discharged to both the outer peripheral side and the inner peripheral side in the form of the burrs 12, and therefore, even when impurities exist on the joint surface 11, the impurities are discharged effectively so that the joint surface 11 is clean. It should be noted that the burrs 12 are discharged until a boundary point 12c between a burr 12a of the rod main body 2 and a burr 12b of the rod head 3 appears on an outer side of an outer peripheral surface of the rod main body 2 and the rod head 3, as shown in FIG. 3.
(5) Finally, the pressed state achieved in (4) is maintained for a predetermined amount of time in order to promote mutual diffusion between the rod main body 2 and the rod head 3 on the joint surface 11, whereby joining of the two components is completed. Thus, the rod main body 2 and the rod head 3 are joined by friction welding.

Once the joining is complete, the outer periphery of the rod main body 2 and the rod head 3 is processed into a smooth continuous form by removing the burrs 12 on the outer peripheral side of the piston rod 1.

In the first step, the axial center portions of the rod main body 2 and the rod head 3 are hollowed out such that the impurities 10 no longer exist on the respective end surfaces 2c, 3c thereof. As a result, no impurities exist on the joint surface 11 of the obtained piston rod 1.

According to the embodiment described above, following actions and effects are obtained.

The rod main body 2 and the rod head 3 are integrated by joining the respective end surfaces 2c, 3c thereof through friction welding after removing the impurities 10 existing in the axial center portions, and therefore the piston rod 1 can be manufactured without impurities on the joint surface 11. Accordingly, intergranular fractures caused by hydrogen embrittlement on the joint surface 11 do not occur, and therefore delayed fractures can be prevented. As a result, a joint strength between the rod main body 2 and the rod head 3 can be improved.

Further, the hollow portion 13 exists in the interior of the piston rod 1, and therefore the high temperature portion in the vicinity of the joint surface 11 is discharged in the form of the burrs 12 to the inner peripheral side as well as the outer peripheral side during the friction welding process. Therefore, in comparison with a case where a solid rod is joined, the obtained joint surface 11 is cleaner.

Furthermore, the rod main body 2 and the rod head 3 are joined by friction-welding the annular end surfaces 2c, 3c, and therefore, in comparison with a case where a solid rod is joined, the joining can be performed using a smaller amount of energy. Hence, a piston rod having a larger diameter than the diameter of a conventional solid piston rod can be joined using a conventional friction welding machine, enabling a reduction in equipment cost.

Moreover, since the hollow portion 13 exists in the interior of the piston rod 1, the piston rod 1 can be reduced in weight.

Embodiments of this invention were described above, but the above embodiments are merely examples of applications of this invention, and the technical scope of this invention is not limited to the specific constitutions of the above embodiments.

This application claims priority based on Japanese Patent Application No. 2009-207892 filed with the Japan Patent Office on September 9, 2009, the entire contents of which are incorporated into this specification.

## Claims

1. A piston rod manufacturing method for manufacturing a piston rod by joining together respective end surfaces of a rod main body and a rod head, comprising:
a first step of hollowing out respective axial center portions of the rod main body and the rod head from the respective end surfaces thereof in order to remove impurities caused by center segregation; and
a second step of joining together the respective end surfaces of the rod main body and the rod head by friction welding.

2. The piston rod manufacturing method as defined in Claim 1, wherein the rod main body and the rod head are obtained by processing a solid steel material manufactured by continuous casting.

3. The piston rod manufacturing method as defined in Claim 1, wherein, in the second step, a high temperature portion in the vicinity of a joint surface of the rod main body and the rod head is caused to flow plastically to an outer peripheral side and an inner peripheral side and thereby discharged in the form of burrs, and
discharging of the burrs is performed until a boundary point between a burr of the rod main body and a burr of the rod head appears on an outer side of an outer peripheral surface of the rod main body and the rod head.
